# EUROPÄISCHE PATENTSCHRIFT

(11) **EP 0 712 275 B1**
(45) Veröffentlichungstag und Bekanntmachung des Hinweises auf die Patenterteilung: **02.02.2000**
(21) Anmeldenummer: 95921806.6
(22) Anmeldetag: 01.06.1995
(51) Int. Cl.: A01M 21/00, A01M 21/04

(54) **VERFAHREN ZUR BEHANDLUNG VON PFLANZEN UNTER VERLETZUNG DER OBERIRDISCHEN PFLANZENTEILE MITTELS EINES STRAHLMITTELS**
PROCESS FOR TREATING PLANTS BY INJURING AERIAL PLANT PARTS WITH A BLASTING MATERIAL
PROCEDE DE TRAITEMENT DE PLANTES PAR BLESSURE DES PARTIES AERIENNES DE LA PLANTE PAR PROJECTION D'UN MATERIAU

(30) Priorität: 03.06.1994 DE 4419409; 26.11.1994 DE 4442220
(43) Veröffentlichungstag der Anmeldung: 22.05.1996
(73) Patentinhaber: BTC Biotechnik International GmbH, 25554 Wilster (DE)
(72) Erfinder: HOPP, Hans, D-25524 Itzehoe (DE); ALBATH, Heidrun, D-25596 Wacken (DE); LUCHT, Uwe, D-25554 Wilster (DE)
(74) Vertreter: Hagemann, Heinrich, Dr.rer.nat., Dipl.-Chem.
(86) Internationale Anmeldenummer: EP9502087
(87) Internationale Veröffentlichungsnummer: WO9533375

(56) Entgegenhaltungen:
- WO-A-82/01977
- WO-A-90/13996
- DE-A- 2 525 497
- DE-A- 3 935 719
- GB-A- 2 120 513
- US-A- 4 926 622

## Beschreibung

Die Erfindung betrifft ein Verfahren zur Behandlung von Pflanzen in Kultur- und Nichtkulturland, unter Verletzung der oberirdischen Pflanzenteile mittels eines Strahlmittels sowie eine Vorrichtung zur Durchführung dieses Verfahrens und das Strahlmittel.

Im modernen Landbau werden Pflanzenbehandlungsmittel, wie Herbizide, Fungizide, Insektizide, Blattdünger, Spurenelemente und Wachstumsregulatoren vorwiegend mittels Spritzgeräten, bestehend aus einem Vorratsbehälter, einer Pumpe und Spritzdüsen, ausgebracht. In der Regel ist es bei diesem bekannten Verfahren, um die gewünschte Wirkung zu erreichen, erforderlich, diese Mittel in relativ hoher Dosierung auszubringen, weil von ihnen nur ein geringer Teil zur Wirkung kommt, da sich die Pflanze durch eine äußere wachsartige Schicht, die Kutikula, vor einem Eindringen fremder Stoffe schützt. Diese Kutikula stellt für das Eindringen der oben angeführten phytoaktiven Substanzen eine beträchtliche Barriere dar.

Die Substanzen können in der Regel aber nur dann die gewünschte Wirkung entfalten, wenn sie von den oberirdischen Teilen der Pflanze aufgenommen, transportiert und in den Stoffwechsel-Kreislauf einbezogen werden. Ein längeres Verweilen auf der Pflanzenoberfläche vermindert oder verändert diese z. T. empfindlichen Substanzen. So können z. B. durch photochemische oder oxydative Reaktionen beträchtliche Wirkungsminderungen oder unerwünschte Wirkungsänderungen eintreten. Ein besonderes Problem ist dabei auch das Abwaschen durch Regen oder starke Taubildung.

Die ungehinderte Penetration von Wirkstoffen für Pflanzenbehandlungsmittel durch die Kutikula in das Leitungsgewebe der Pflanze stellt daher immer wieder ein schwierig zu lösendes Problem bei der Konzipierung und Ausbringung von Pflanzenbehandlungsmitteln dar. Je schneller die Penetration erfolgt, desto wirksamer ist das Pflanzenbehandlungsmittel. Insbesondere bei schneller Penetration kann auch die auf die Pflanze aufzubringende Dosis deutlich reduziert werden. Da die für die Kultur von Nutz- und Zierpflanzen erforderlichen Behandlungsmittel heute allgemein als umweltbelastend angesehen werden, ist eine Reduzierung solcher Substanzen, die großteils als Biozide einzustufen sind, sehr erwünscht.

Durch die GB 21 20 513 ist es bereits bekannt, daß es von Vorteil sein kann, phytotoxische Mittel auf Pflanzen nach deren Verletzung aufzutragen. Die Verletzung der oberirdischen Pflanzenteile erfolgt hier jedoch mit einer ungewöhnlich komplizierten Vorrichtung. Das beschriebene Verfahren ist kaum praktizierbar. Andererseits ist es durch die DE 25 25 497 A1 bekannt geworden, zur Vernichtung von Pflanzenwuchs die Pflanze mittels eines Sandstrahlgebläses völlig zu zerschlagen. Das beschriebene Gerät arbeitet nur in der Waagerechten und ist zum Vereinzeln von Kultur-Pflanzen gedacht. Der Einsatz von Pflanzenbehandlungsmitteln ist nicht beschrieben.

Desgleichen hat es nicht an weiteren Versuchen gefehlt, Herbizide durch mechanische und/oder thermische Verfahren der Unkrautbehandlung zu ersetzen. Bisher haben jedoch physikalische Verfahren unter Anwendung von beispielsweise Gamma-Strahlung und Wärme-Strahlung nicht den erwünschten Durchbruch gebracht. Zu diesen Verfahren zählt auch das Aufbringen von verflüssigtem Gas auf eine von Pflanzenwachstum freizuhaltende Fläche, wie es in der DE 39 35 719 offenbart ist. Hierzu ist jedoch ein sehr hoher technischer und wirtschaftlicher Aufwand erforderlich.

Die im modernen Landbau zur Unkrautbekämpfung eingesetzten Herbizide haben die früher fast ausschließlich angewandten mechanischen Verfahren weitgehend abgelöst. Unter Unkräutern versteht man im allgemeinen alle Wild- und Kulturpflanzen, die an ihrem jeweiligen Standort unerwünscht sind (Schadpflanzen). Im engeren Sinne werden nur die zweikeimblättrigen (dikotylen) Schadpflanzen als "Unkräuter" bezeichnet. Für die einkeimblättrigen (monokotylen) Pflanzen hat sich der Begriff "Ungräser" eingebürgert. Die Schadpflanzen konkurrieren mit den Kulturpflanzen um Wasser, Licht, Nährstoffe und Lebensraum und verringern dadurch in erheblichem Maße die Flächenerträge. Zur Bekämpfung der Schadpflanzen und zur Bewahrung der Kulturpflanzen werden selektive Herbizide eingesetzt. Totalherbizide vernichten die gesamte Vegetation und werden insbesondere auf Industriegeländen, Gleisanlagen, Wegen und Plätzen angewendet.

In jüngster Zeit ist auch die Pflege von Gleisanlagen im Hinblick auf die stärkeren Anforderungen an Verkehrssicherheit und Umweitschutz bedeutsam geworden. In der Vergangenheit haben sich hier total wirkende Gleisherbizide als sicherste Problemlöser erwiesen. Diese müssen jedoch im Rahmen des Umweltschutzes immer schärfere Zulassungsbestimmungen durchlaufen.

Der Erfindung liegt die Aufgabe zugrunde, beim Aufbringen von Pflanzenbehandlungsmitteln die Wirkstoffmenge stark zu reduzieren und außerdem das eingangs beschriebene Verfahren, insbesondere auch bei der Aufwuchsbekämpfung auf Gleisanlagen, so weiterzubilden, daß es mit hoher Arbeitsgeschwindigkeit durchführbar ist und den Einsatz herkömmlicher Herbizide weitgehend ausschließt bzw. deren Aufwandmenge stark herabsetzt.

Diese Aufgabe wird erfindungsgemäß durch die Merkmale des Anspruchs 1 gelöst. Die weitere Ausgestaltung der Erfindung ist den weiteren Ansprüchen zu entnehmen.

Dadurch, daß auf die oberirdischen Pflanzenteile vor oder während ihrer Verletzung mit dem Strahlmittel Pflanzenbehandlungsmittel derart aufgebracht werden, daß diese aufgrund der oberflächlichen Verletzung von der Pflanze unmittelbar aufgenommen werden, wird erreicht, daß geringe Wirkstoffmengen erforderlich sind, um an den Pflanzen den gewünschten Behandlungseffekt zu erreichen. Die auf die Oberfläche der Pflanzen auftreffenden Wirkstoffe werden sehr schnell fast vollständig von der Pflanze aufgenommen. Insbesondere hierdurch ist als besonderer Vorteil auch der Einsatz solcher Substanzen möglich, bei denen normalerweise von ihrer chemischen Konstruktion her keine herbizide Wirkung ausgeht.

Ferner wird die Aufgabe durch eine Vorrichtung zur Durchführung dieses Verfahrens gelöst, die dadurch gekennzeichnet ist, daß Mittel, wie eine Strahldüse oder ein Schleuderrad, zum Beschleunigen und zum Ausbringen und gegebenenfalls auch zum Zusammenführen des Strahlmittels und des Pflanzenbehandlungsmittels vorgesehen sind.

Vorzugsweise kommt ein feinteiliges Strahlmittel zum Einsatz, das dadurch gekennzeichnet ist, daß dessen kleine feste Teilchen eine Korngröße von 50 bis 3.000 µm aufweisen und scharfkantig, oberflächlich zerklüftet und/oder porös sind.

Gemäß einer bevorzugten Ausführungsform der Erfindung werden mittels einer Strahldüse gleichzeitig Pflanzenbehandlungsmittel und ein feinteiliges Strahlmittel unter Verletzung der oberirdischen Teile der Pflanzen derart aufgebracht, daß dort aufgrund der oberflächlichen Beschädigung bzw. Offenlegung der schützenden Kutikula eine unmittelbare Aufnahme und Einwirkung der Pflanzenbehandlungsmittel erfolgt. Dabei werden die Teilchen des Strahlmittels derart gesteuert von der Strahldüse ausgestoßen, daß sie die Kutikula der oberirdischen Pflanzenteile, insbesondere der Blätter, entweder durchdringen oder aufreißen oder nur aufrauhen und/oder auch an den Blättern klebenbleiben, oder in der Pflanze steckenbleiben.

Sofern ein Schleuderrad zur Anwendung kommt, ist es möglich, an das Schleuderrad den Behälter für das Strahlmittel anzuschließen und außerdem eine aus einem Wirkstoffbehälter mit Pflanzenbehandlungsmittel gespeiste Sprühdüse derart anzuordnen, daß auf die oberirdischen Pflanzenteile vor oder während ihrer Verletzung mit dem Strahlmittel das Pflanzenbehandlungsmittel aufgebracht wird.

Vorzugsweise werden als Pflanzenbehandlungsmittel phytoeffektive Mittel, wie Herbizide, Fungizide, Insektizide und/oder Blattdünger, Spurenelemente oder Wachstumsregulatoren, aufgebracht. Als herbizides Mittel können dabei auch Düngemittel, wie z. B. Ammoniumsulfat, Harnstoff, Kalkstickstoff oder Kainit, sowohl in gekörnter als auch in gelöster Form eingesetzt werden, die bekanntlich in entsprechender Dosierung starke Verätzungen der oberirdischen Pflanzenteile hervorrufen. Diese sterben dann, insbesondere auch im Jugendstadium, rasch ab.

Grundsätzlich können durch dieses neue Verfahren alle Pflanzenbehandlungsmittel unmittelbar und schnell wirksam an und in die Pflanze gebracht werden. Das Verfahren eignet sich aber insbesondere für die Ausbringung von herbizidwirksamen Stoffen. Hier kann nämlich der durch Luftdruck und Düsenform bzw. durch das Schleuderrad, Korngröße und Kornbeschaffenheit steuerbare Prozess schon allein durch eine starke mechanische Verletzung der Pflanzen eine erhebliche Beschädigung der Unkräuter bewirken; besonders hervorgerufen durch einen plötzlichen hohen Wasserverlust und durch starke Verdunstung, was sich in einer starken Welke äußert.

Eine Steuerung des jeweils günstigsten Verletzungsgrades ist möglich durch die Variierung des Luftdrucks, mit dem die Granuli herausgeschleudert werden bzw. durch die Drehzahl des Schleuderrades, durch die Menge der Granuli, durch ihre Korngröße, durch ihre innere und äußere Beschaffenheit, sowie die Entfernung von der zu behandelnden Pflanze. So kann insbesondere bei jungen Unkräutern eine entsprechend gesteuerte Behandlung allein schon ausreichen, ohne den Einsatz eines herbizidwirkenden Mittels, die Pflanze zu eliminieren. Andererseits ist bei dem neuen Verfahren aber durchaus auch der Einsatz solcher Substanzen möglich, die nur aufgrund der gleichzeitigen Öffnung der Kutikula der Pflanze wirksam werden können.

Vorzugsweise kann als Pflanzenbehandlungsmittel auch ein phytotoxisch wirkendes Düngemittel in fester oder flüssiger Form eingesetzt werden. So ist es möglich, als Pflanzenbehandlungsmittel, d. h. als herbiziden Wirkstoff, Ammoniumsulfat, Harnstoff oder Kalkstickstoff oder auch organische Säuren einzusetzen. Einsetzbar sind außerdem Fungizide, Wachstumsregler und/oder deren Wirkstoffe, sowie Dünger und andere phytoeffektive Stoffe, auch in Kombination.

Die Pflanzenbehandlungsmittel sind erfindungsgemäß vorzugsweise in einer Flüssigkeit gelöst und können so entsprechend der erforderlichen Wirkstoffmenge auch stark verdünnt ausgebracht werden. Alternativ können die Pflanzenbehandlungsmittel auch in suspendierter oder emulgierter Form vorliegen. Die Pflanzenbehandlungsmittel können zudem in einer viskosen Flüssigkeit gelöst sein, die durch Zusätze von Verdickungsmitteln, wie Stärke, wasserlösliche Wachse, Polyuronide oder Polysaccharide, hergestellt wird. Hierdurch wird ein sehr guter Klebeeffekt der Pflanzenbehandlungsmittel und insbesondere auch der Granuli auf der Pflanzenoberfläche erreicht. Es wird so zusätzlich eine Abgabe und Aufnahme der haftenden Wirkstoffe über einen längeren Zeitraum, d. h. ein "slow-release"-Effekt, erzielt.

Durch die vorbeschriebenen Maßnahmen kann insbesondere auch die Flüssigkeitsmenge, die für eine allseitige Benetzung der oberirdischen Teile, insbesondere der Blätter, und damit für eine gute Aufnahme der Wirkstoffe erforderlich ist, erheblich reduziert werden. Somit werden z. B. nur 50 l Flüssigkeit pro Hektar oder weniger benötigt.

Als vorteilhaft hat es sich erwiesen, wenn die Teilchen des Strahlmittels scharfkantig, oberflächlich zerklüftet und/oder porös sind. Es wird so eine sehr effektive Beschädigung der Pflanzenoberfläche erreicht. Sofern die porösen Teilchen des Strahlmittels offenporig sind, kommt es zu einer Einbettung von Wirkstoff und damit zu einem besonders effektiven Eindringen des Wirkstoffs, zusammen mit den Teilchen in die Pflanzen. Im übrigen können auch die Teilchen des Strahlmittels selbst ein phytoeffektives Mittel darstellen.

Im Rahmen der Erfindung ist es ferner vorgesehen, daß auf die oberirdischen Pflanzenteile vor oder während ihrer Verletzung mit dem Strahlmittel ein Pflanzenbehandlungsmittel derart aufgebracht wird, daß die Pflanzen aufgrund oberflächlicher Verletzung und aufgrund der Einwirkung eines als phytotoxisches Mittel wirkenden Pflanzenbehandlungsmittels absterben. Vorzugsweise wird dieses Verfahren zur Behandlung von Pflanzenbewuchs in Gleisanlagen herangezogen. Hierbei wird das Sandstrahlgebläse bzw. das erfindungsgemäße Verfahren vorzugsweise so ausgelegt, daß nicht nur der Pflanzenbewuchs unmittelbar im Gleisbereich (im Innenbereich), sondern auch der sich über die Schienen hinaus erstrekkende Außenbereich, und zwar randscharf, bekämpft wird. Demzufolge läßt sich auch dieser Außenbereich erfindungsgemäß günstig behandeln, was für die bisher praktizierten Verfahren, die eine Flüssigkeit aussprühen, nicht gleichermaßen gilt.

Bei der Durchführung des erfindungsgemäßen Verfahrens bei der Aufwuchsbekämpfung in Gleisanlagen können die bisher zur Aufbringung von Gleisherbiziden herangezogenen schienengebundenen Fahrzeuge mit der vergleichsweise hohen Betriebsgeschwindigkeit von ca. 40 km/h herangezogen werden. Diese werden lediglich mit einem geeigneten Sandstrahlgebläse oder einem Schleuderrad ausgerüstet, das insbesondere die angesprochene Forderung "randscharf", d. h. ohne Abdrift, erfüllt. Sofern ein Sandstrahlgebläse zum Einsatz kommt, so werden vorzugsweise handelsübliche, möglicherweise geringfügig modifizierte Drucksandstrahlgebläse benutzt. Wird Sand als feinteiliges Strahlmittel herangezogen, dann empfiehlt es sich, im Hinblick auf die erstrebenswerte lange Lebensdauer der Sandstrahldüsen, sogenannte "Norbid-Düsen" einzubauen.

Die Körnungsgröße des jeweils eingesetzten feinteiligen Strahlmittels richtet sich nach der Art der zu behandelnden bzw. zu bekämpfenden Pflanzen. Sie liegt vorzugsweise bei den üblicherweise zu bekämpfenden unerwünschten Pflanzen, insbesondere im Gleisbereich, zwischen etwa 50 bis 3.000 µm, insbesondere etwa 100 bis 1.000 µm. Im Hinblick auf die angestrebte Beschädigung der oberirdischen Pflanzenteile ist es vorteilhaft, daß die Strahlmittelteilchen nicht oberflächlich abgerundet, sondern scharfkantig, oberflächlich zerklüftet und/oder porös sind. Aus den nachfolgend noch geschilderten Gründen wird es bevorzugt, daß die feinen porösen Teilchen des Strahlmittels offenporig sind. Für eine nicht herbizide Pflanzenbehandlung ist es in der Regel vorteilhaft, die Oberfläche der Pflanzen lediglich leicht aufzurauhen. Hier haben sich Teilchengrößen von 50 bis 500 µm als vorteilhaft erwiesen.

Mit Vorteil läßt sich Sand im Rahmen der Erfindung einsetzen, so beispielsweise Seesand und Dünensand oder Hochofenschlacke, z. B. Cu-Schlacke. Es können auch in der Natur vorkommende bzw. synthetisch herstellbare Alumosilikate, insbesondere offenporige Alumosilikate, verwendet werden, wobei sich Zeolithe sowie Perlite, insbesondere Puffperlit, als besonders geeignet erwiesen haben. Als Strahlmittel kann ferner durchaus auch der betreffende Ackerboden verwendet werden, der während des Arbeitsganges durch eine besondere Vorrichtung in der Zugmaschine aufgenommen, aufbereitet und dann dem Sandstrahlgebläse zugeführt wird.

Im übrigen können als Strahlmittel auch Agrarstrahlmittel, wie Walnuß-Schalen, gemahlene Obstkerne, gemahlene Spreu, gemahlene Reisschalen, etc., herangezogen werden. In Einzelfällen sind sie zu weich, so daß sie die Oberfläche der oberirdischen Pflanzenteile nicht hinlänglich verletzen. Weiche Strahlmittel bieten sich in der Regel jedoch dann an, wenn keine Herbizide, sondern Fungizide, Wachstums-Regulatoren oder düngende Substanzen aufgebracht werden sollen, weil in diesen Fällen nur eine geringfügige Aufrauhung der Pflanzenoberfläche ohne nachhaltige Verletzung der Pflanze angestrebt werden muß.

Zur Optimierung des erfindungsgemäßen Verfahrens wird vor oder während der Verletzung der oberirdischen Pflanzenteile ein phytoeffektives Mittel aufgebracht. Dies kann dadurch erfolgen, daß das phytoeffektive Mittel in die innere und/oder äußere Oberfläche der scharfkantigen bzw. oberflächlich zerklüfteten feinen Strahlmittel oder, wenn diese offenporig sind, auch in die innere Oberfläche eingebracht wird. Vorzugsweise werden die feinteiligen Sandstrahlmittel zu Vorbereitung in die Lösung, insbesondere die wäßrige Lösung eines Pflanzenbehandlungsmittels, z. B. eines phytotoxischen Mittels, eingebracht. Anschließend wird das Lösungsmittel nach Ausfüllen der inneren Poren bzw. dem Belegen der Oberfläche der Strahlmittelteilchen verdampft.

Wenn im Rahmen der vorliegenden Erfindung von einem "phytotoxischen Mittel" gesprochen wird, so ist dieses weitestgehend zu verstehen. Es kann sich dabei um klassische Herbizide, insbesondere um solche, die über die oberirdischen Pflanzenteile aufgenommen werden, sowie sogar um bestimmte Düngemittel handeln, die nach der oberflächlichen Beschädigung der unerwünschten Pflanzen phytotoxisch wirken. Hier hat sich beispielsweise Ammoniumsulfat als besonders geeignet erwiesen. Das bedeutet, daß das eingesetzte "phytotoxische Mittel" keine eigenständige phytotoxisch-herbizide Wirkung im ursprünglichen Sinne aufweist.

Im Falle des zusätzlichen Einsatzes eines phytotoxischen Düngemittels zeigt das erfindungsgemäße Verfahren besondere Vorteile bei der selektiven Bekämpfung unerwünschter Pflanzen in solchen Kulturen, die in Reihensaat bzw. Reihenpflanzung vorliegen, wie insbesondere bei der selektiven Bekämpfung der Unkräuter in Zuckerrüben, Mais, Sojabohnen, Baumwolle, Tee und Obstkulturen. Dabei hat es sich überraschenderweise gezeigt, daß das phytotoxische Düngemittel, wenn es die erforderliche Teilchengröße, Härte sowie die innere oder äußere Oberflächenstruktur, wie sie oben beschrieben wurde, hat, ohne die weiter oben beschriebenen, üblicherweise eingesetzten feinteiligen Strahlmittel allein herangezogen werden kann.

Bei der Ausgestaltung des erfindungsgemäßen Verfahrens, bei dem die physikalische Verletzung der oberirdischen Pflanzenteile und der Einsatz eines Pflanzenbehandlungsmittels, insbesondere eines phytotoxischen Mittels, kombiniert werden, beispielsweise eines gängigen Blattherbizids, führt diese Kombination dazu, daß die Penetration der Herbizide verbessert wird, die normalerweise durch die kutinisierte Blattoberfläche erheblich behindert ist. Somit können herbizide Substanzen leichter und schneller in den Stoffwechselkreislauf der Schadpflanze gelangen. Hierdurch wird deren Wirkung erheblich verbessert, so daß die eingesetzte Menge an beispielsweise üblichem Blattherbizid um mehr als 75 % verringert werden kann, um den gleichen Effekt wie ohne Verletzung zu erreichen. Bei der Anwendung von solchen Strahlmitteln, die erfindungsgemäß vorher mit phytotoxischen Mitteln beladen wurden, tritt zudem ein sogenannter "slow-release"-Effekt ein, in dem diese Mittel über einen längeren Zeitraum kontinuierlich in das Pflanzengewebe abgegeben werden.

Die jeweils zur Behandlung z. B. zur Bekämpfung der unerwünschten Pflanzen erfindungsgemäß auf die Flächeneinheit aufzubringende Menge an feinteiligem Strahlmittel, läßt sich nicht grundsätzlich angeben. Diese Menge hängt von dem jeweiligen Einzelfall der zu behandelnden Kultur bzw. des auszubringenden Mittels ab. Bei der Unkrautbekämpfung ist besonders die Art und das Alter der zu bekämpfenden Pflanzen zu berücksichtigen. Dem Fachmann ist es im Rahmen der erfindungsgemäßen Lehre ohne weiteres möglich, hier die erforderlichen Optimierungen im Rahmen rein handwerklicher Bemühungen zu ermitteln. Das gleiche gilt auch für die Art der herangezogenen feinteiligen Strahlmittel, insbesondere auch für die jeweilige Härte bzw. Teilchengröße. Auf sandigen Böden und bei entsprechenden Siebeinrichtungen der eingesetzten Geräte läßt sich auch der zu behandelnde Ackerboden verwenden.

Die Vorteile der Erfindung sind aufgrund folgender Schilderungen ohne weiteres erkennbar: Es werden einerseits die Vorteile klassischer Herbizide genutzt, ohne deren Nachteile beim Einsatz, wie Abdrift und Grundwasserbelastung. Es ist sogar möglich, übliche Düngemittel, wie Ammoniumsulfat, Kalkstickstoff und Harnstoffe, zur Erzielung der wünschenswerten Effekte heranzuziehen. Darüberhinaus kann beispielsweise im Gleisbereich mit einer hohen Arbeitsgeschwindigkeit von ca. 40 km/h bei der Kombination der physikalischen Verletzung und des Einsatzes phytotoxischer Mittel, die keine eigenständige phytotoxisch-herbizide Wirksamkeit zeigen, vorgegangen werden. Das erfindungsgemäße Verfahren ist problemlos durchführbar und kostengünstig. Es ist sehr effizient. Dadurch, daß auf die oberirdischen Pflanzenteile vor oder während ihrer Verletzung mit dem Strahlmittel ein Pflanzen-behandlungsmittel derart aufgebracht wird, daß dieses aufgrund der oberflächlichen Verletzung von der Pflanze unmittelbar aufgenommen wird, kann erreicht werden, daß geringe Wirkstoffmengen erforderlich sind, um an den Pflanzen den gewünschten Behandlungseffekt zu erreichen. Die auf die Oberfläche der Pflanzen auftreffenden Wirkstoffe werden unmittelbar und fast vollständig von der Pflanze aufgenommen.

Die Erfindung wird nachfolgend anhand einiger Beispiele noch näher erläutert werden.

### Beispiel 1

Ein auf den Gleisanlagen der Bundesbahn derzeit eingesetzter Spritzzug wurde mit einem handelsüblichen Sandstrahlgebläse ausgestattet. Dieses ermöglichte das gezielte Aufbringen von feinteiligem Sand in den zu behandelnden Gleisbereich. Das eingesetzte feinteilige Strahlmittel bestand aus Sand einer Teilchengröße von 1,0 bis 2,0 mm. Der modifizierte Spritzzug fuhr mit einer Arbeitsgeschwindigkeit von ca. 40 km/h und schleuderte das oben bezeichnete Strahlmittel in einer Menge von 25 bis 45 g/m² auf die zu behandelnde Gleisfläche. Diese war überwiegend mit folgenden Pflanzen bewachsen: Knöterich, Hundskamille, Einjähriges Rispengras und Hirse. Die meisten Pflanzen befanden sich im 2 bis 6-Blattstadium. Unmittelbar nach Abschluß der Behandlung setzte ein erkennbares Absterben der unerwünschten Pflanzen ein. Dieses war nach etwa 16 Tagen abgeschlossen und führte zu einer fast vollständigen Aufwuchsfreiheit. Der unerwünschte Bewuchs mit Pflanzen wurde etwa 3 bis 4 Monate unterdrückt.

### Beispiel 2

Bei dieser Anwendung handelte es sich um den gleichen Unkrautbestand, der aber in seinem Wachstum bereits weiter fortgeschritten war; die meisten Pflanzen hatten mehr als 6 Blätter ausgebildet.

Die Behandlung wurde, wie unter Beispiel 1, mit dem Unterschied durchgeführt, daß die ausgebrachte Strahlmittelmenge auf 15 bis 30 g/m² reduziert und gleichzeitig 30 % der üblicherweise erforderlichen Aufwandmenge eines üblichen Gleisherbizides ausgebracht wurde.

Das Absterben der Unkräuter war nach etwa 3 Wochen abgeschlossen; die Strecke blieb bis Ende der Vegetationsperiode praktisch unkrautfrei.

### Beispiel 3

In einem Maisfeld, in dem die jungen Maispflanzen eine Höhe von ca. 15 cm hatten, wurden mittels eines Strahlgebläses ca. 50 g/m² eines zerklüfteten Strahlmittels (Cu-Schlacke) in einer Korngröße von 0,5 bis 1,0 mm randscharf zwischen den Reihen ausgebracht, indem die Maispflanzen an beiden Seiten durch Schutzbleche, die an dem verwendeten Aggregat ausgebracht waren, geschützt wurden.

Die mit dem Mais aufgewachsene Mischverunkrautung wurde soweit dezimiert, daß sie nach wenigen Wochen vom Mais überwachsen wurde und nicht mehr störte.

Für die Bekämpfung der in den Maisreihen stehenden, verbliebenen Unkräuter brauchten nur 20 % der sonst üblichen Herbizidmenge eingesetzt werden.

### Beispiel 4

In einem Zuckerrübenfeld hatten die Pflanzen 6 bis 8 echte Laubblätter gebildet. Es war eine sehr starke Mischverunkrautung vorhanden; Bedeckungsgrad etwa 60 %.

Mit einem gleichen Aggregat, wie im Beispiel 3 angegeben, wurde eine Bekämpfung vorgenommen. Als Strahlmittel wurde handelsübliches (gekörntes) Ammoniumsulfat in einer Dosierung von 15 g/m² ausgebracht.

Nach 8 Tagen waren alle Unkräuter vollkommen abgestorben. Die Bekämpfung der unmittelbar in den Rübenreihen stehenden Unkräuter erforderte noch 20 % der üblicherweise benötigten Herbizidmenge.

Zwei Ausführungsbeispiele einer erfindungsgemäßen Vorrichtung sind in der Zeichnung dargestellt und werden im folgenden näher beschrieben. Es zeigen:
Figur 1, eine schematische Darstellung einer Vorrichtung;
Figur 2, einen Querschnitt durch die Strahldüse der Vorrichtung gemäß Figur 1;
Figur 3, ein Schleuderrad.

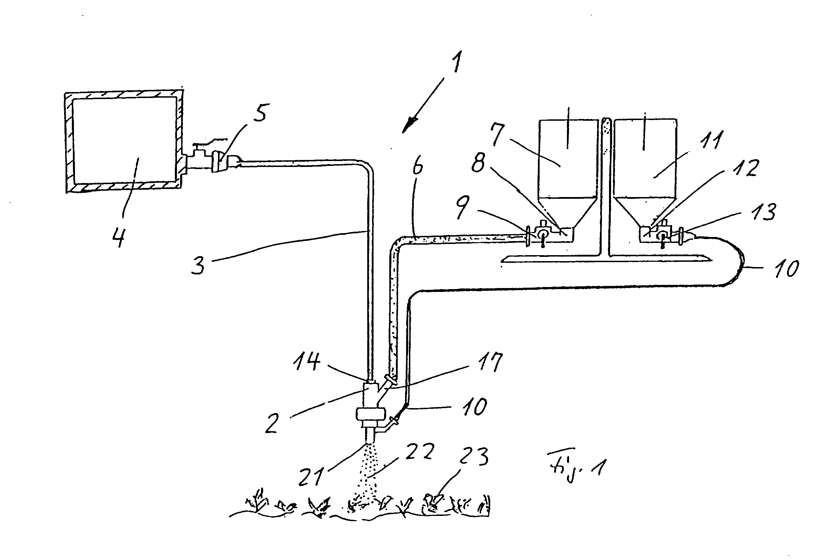

In der Figur 1 der Zeichnung ist mit 1 eine Vorrichtung bezeichnet, die eine Strahldüse 2 aufweist, die über eine Zuleitung 3 mit einem Drucklufterzeuger 4 verbunden ist. Als Drucklufterzeuger 4 wird ein industriell hergestellter Kompressor in Verbindung mit einem Druckluftbehälter verwendet, die beide in der Zeichnung nicht gesondert dargestellt sind. In der Zuleitung 3 zwischen der Strahldüse 2 und dem Drucklufterzeuger 4 ist im übrigen ein Steuerventil 5 angeordnet.

An die Strahldüse 2 ist über eine seitliche Zuleitung 6 ein Behälter 7 für das Strahlmittel angeschlossen. An einem Auslaß 8 des Behälters 7 ist in der seitlichen Zuleitung 6 ein einstellbares Belüftungsventil 9 angeordnet. Von der Strahldüse 2 führt eine weitere seitliche Zuleitung 10 an einen Wirkstoffbehälter 11 für das Pflanzenbehandlungsmittel. An einem Ausgang 12 des Wirkstoffbehälters 11 ist in der Zuleitung 10 zur Strahldüse 2 ein einstellbares Belüftungsventil 13 angeordnet.

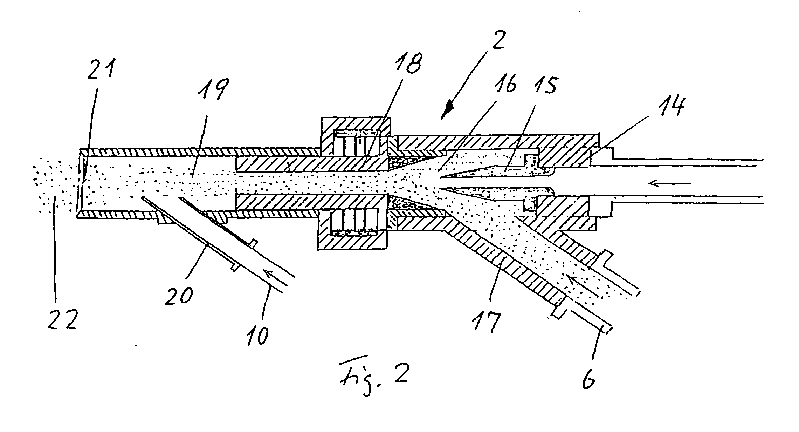

Wie aus der Figur 2 ersichtlich, weist die Strahldüse 2 einen rückseitigen zentralen Anschlußstutzen 14 auf, an dem die an den Drucklufterzeuger 4 führende Zuleitung 3 angeschlossen ist. An den Anschlußstutzen 14 schließt sich in der Strahldüse 2 eine Druckluftdüse 15 an, in der die einströmende Druckluft beschleunigt wird. Die Druckluftdüse 15 mündet in eine Mischkammer 16 ein, in die ein seitlicher Anschlußstutzen 17 für die Zufuhr des Strahlmittels aus dem Behälter 7 gleichfalls einmündet. An den seitlichen Anschlußstutzen 17 ist die an den Behälter 7 führende Zuleitung 6 angeschlossen.

An die Mischkammer 16 der Strahldüse 2 schließt sich eine Beschleunigungsdüse 18 an, in der das Luft-Strahlmittelgemisch beschleunigt wird. An die Beschleunigungsdüse 18 schließt sich eine weitere Mischkammer 19 an, in die ein seitlicher Anschlußstutzen 20 einmündet. An dem seitlichen Anschlußstutzen 20 ist die an den Wirkstoffbehälter 11 führende seitliche Zuleitung 10 angeschlossen. An die Mischkammer 19 schließt sich eine Austrittsöffnung 21 der Strahldüse 2 an.

Wie aus der Figur 1 ersichtlich, tritt aus der Strahldüse 2 ein Gemisch 22 aus Luft, Strahlmittel, Wasser und Pflanzenbehandlungsmittel aus und trifft auf die oberirdischen Teile von Pflanzen 23. In dem beschriebenen Ausführungsbeispiel wird die Druckluft, über das Steuerventil 5 gesteuert, über die Zuleitung 3 an den Anschlußstutzen 14 der Strahldüse 2 geführt. Wie aus der Figur 2 ersichtlich, wird die Druckluft in der Druckluftdüse 15 der Strahldüse 2 beschleunigt und gelangt dann in deren Mischkammer 16. In die Mischkammer 16 wird über den seitlichen Anschlußstutzen 17 Strahlmittel aus dem Behälter 7 zugeführt. Ein vor dem Auslaß 8 des Behälters 7 angeordnetes Belüftungsventil ermöglicht die Steuerung der Menge des zugeführten Strahlmittels über die Höhe eines einstellbaren Unterdruckes. Je höher der Unterdruck einreguliert wird, desto größer ist die Menge des abgesaugten Strahlmittels. Es ist also möglich, den Anteil des Strahlmittels in der Druckluft entsprechend der vom Verfahren und der eingesetzten Wirkstoffkomponenten vorgegebenen Erfordernisse einzustellen.

In der Mischkammer 16 erfolgt dann eine Vermischung von Druckluft und Strahlmittel, und in der sich anschließenden Beschleunigungsdüse 18 der Strahldüse 2 erfolgt eine Beschleunigung der Teilchen des Strahlmittels. In der sich anschließenden Mischkammer 19 der Strahldüse 2 wird über den seitlichen Anschlußstutzen 20 das Pflanzenbehandlungsmittel zugeführt. Dieser seitliche Anschlußstutzen 20 steht über die seitliche Zuleitung 10 mit dem Wirkstoffbehälter 11 in Verbindung. Über das am Ausgang 12 des Wirkstoffbehälters 11 angeordnete einstellbare Belüftungsventil 13 ist die der Strahldüse 2 zugeführte Menge des Pflanzenbehandlungsmittels einregulierbar. Das Belüftungsventil 13 ermöglicht es, den am Ausgang 12 des Wirkstoffbehälters 11 wirksamen Unterdruck einzuregulieren. Je höher der Unterdruck einreguliert ist, desto größer ist die Menge des austretenden Pflanzenbehandlungsmittels. Die zugeführte Menge ist somit den jeweiligen Erfordernissen bei der Behandlung der Pflanzen 23 exakt anzupassen.

In der Mischkammer 19 der Strahldüse 2 erfolgt eine intensive Vermischung des zugeführten Pflanzenbehandlungsmittels mit der Druckluft und dem Strahlmittel. Dabei lagert sich das Pflanzenbehandlungsmittel z. B. auch an der Oberfläche der Teilchen des Strahlmittels an. Der Grad der Anlagerung ist abhängig von der Struktur der Oberfläche der Teilchen des Strahlmittels. Wie bereits beschrieben, ermöglicht eine zerklüftete Oberfläche der Teilchen eine intensive Anlagerung des Pflanzenbehandlungsmittels. Über die Austrittsöffnung 21 der Strahldüse 2 tritt das Gemisch 22 aus und gelangt an die zu behandelnden Pflanzen 23.

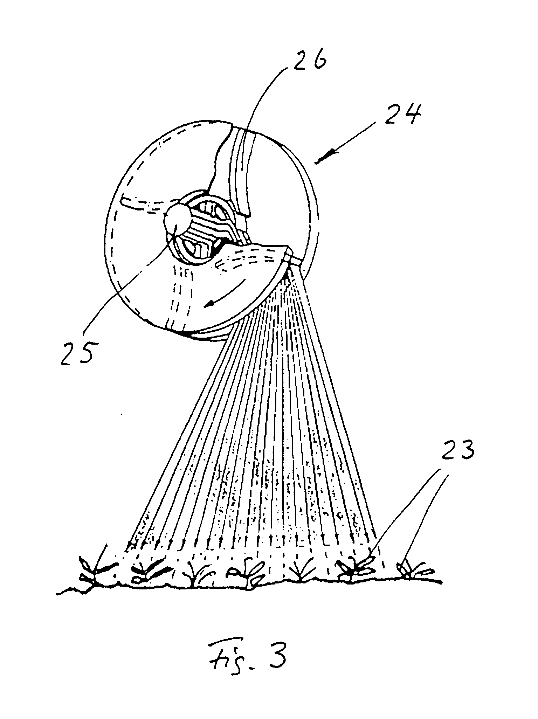

In der Figur 3 der Zeichnung ist ein Schleuderrad 24 dargestellt, mit dem gleichfalls das Strahlmittel und gegebenenfalls auch das Pflanzenbehandlungsmittel beschleunigt und ausgebracht werden können. Das Strahlmittel wird dabei aus einem in der Vorrichtung angeordneten, in der Zeichnung nicht dargestellten Behälter, dem Schleuderrad 24 im Bereich seiner Drehachse 25 zugeführt. Gegebenenfalls wird in diesem Bereich auch das Pflanzenbehandlungsmittel aus einem zugehörigen Behälter zugeführt. Im Schleuderrad 24 angeordnete Leitschaufeln 26 bewirken dann aufgrund der Rotationsbewegung des Schleuderrades 24, wie aus Figur 3 ersichtlich, die Beschleunigung und das Austragen des Strahlmittels und gegebenenfalls auch des Pflanzenbehandlungsmittels auf die zu behandelnden Pflanzen 23.

Die beschriebenen Vorrichtungen ermöglichen eine exakte Anpassung der Beschädigung der Pflanzenoberfläche und der Zufuhr des Pflanzenbehandlungsmittels an die jeweiligen Erfordernisse. Es können Pflanzenbehandlungsmittel unterschiedlichster Art auf Pflanzen 23 aufgebracht werden. Die Verdüsung in der Strahldüse 2 bzw. die Verwirbelung im Schleuderrad 24 bewirken eine innige Vermischung der vier Komponenten, nämlich Luft, Strahlmittel, Flüssigkeit und Pflanzenbehandlungsmittel bzw. von Strahlmittel, Flüssigkeit und Pflanzenbehandlungsmittel. Stets wird erreicht, daß beim Auftreffen auf die Pflanzenoberfläche die Kutikula durch das Strahlmittel aufgerissen und verletzt wird, so daß das vorzugsweise in einer Flüssigkeit gelöste Pflanzenbehandlungsmittel schnell und fast vollständig eindringen kann und unmittelbar eine hohe Wirkung entfaltet. Das Pflanzenbehandlungsmittel wird dabei bei einem gleichzeitigen Ausbringen zusammen mit dem Strahlmittel von diesem tief in die Struktur der Pflanzen 23 eingebracht. Da die Oberfläche des Strahlmittels mit dem Pflanzenbehandlungsmittel benetzt ist, wird der beschriebene Effekt zusätzlich vorteilhaft verstärkt. Außerdem wird gleichzeitig die geöffnete Oberfläche durch die Trägerflüssigkeit des Pflanzenbehandlungsmittels benetzt. Sofern die Pflanzenbehandlungsmittel in einer viskosen Flüssigkeit gelöst sind, der Verdickungsmittel zugesetzt sind, ist daher eine zusätzlich gesteigerte Haftung des Strahlmittels und auch der Pflanzenbehandlungsmittel auf der Pflanzenoberfläche erzielbar. Die Folge ist, daß u. a. auch aus diesem Grund die Menge des zur Behandlung der Pflanzen 23 erforderlichen Pflanzenbehandlungsmittels und der Flüssigkeit insgesamt gegenüber dem Stand der Technik erheblich verringert werden kann. Es werden nur etwa 50 Liter Flüssigkeit oder weniger pro Hektar benötigt.

Besonders auch in der Herbizidforschung und Herbizidanwendung ist dabei die Penetration von Herbiziden durch die Kutikula in das Leitungsgewebe der Pflanze stets ein schwierig zu lösendes Problem gewesen. Je schneller diese Penetration erfolgt, desto wirksamer ist eine herbizide Wirkung. Schlechte bzw. langsame Penetration hat folgende Nachteile: a) Abtropfen bzw. Abregnen der Herbizidlösung, b) Verdunstung der Herbizidlösung und c) chemische Veränderung der aufgebrachten Pflanzenwirkstoffe, durch z. B. photochemische oder oxidative Einflüsse.

Durch die Maßnahme des Aufbringens eines Pflanzenbehandlungsmittels vor oder während der Oberflächenverletzung der Pflanze wird bewirkt, daß dieses Mittel in besonders wirksamer Weise von dieser aufgenommen werden kann, indem nämlich durch die auftreffenden scharfkantigen Strahlpartikel der Wirkstoff mit der Verletzung in die offene "Wunde" hineinschlagen wird. Mit anderen Worten bedeutet das, daß die Penetration des phytotoxischen Mittels mit der Folge verbessert wird, daß dessen eingesetzte Menge stark herabgesetzt werden kann. Die mehrfach angesprochene Verletzung der Pflanzenoberfläche im Sinne der Erfindung hat einen dreifachen Effekt: 1. Sie bewirkt im Falle der Unkrautbekämpfung eine allgemeine Schwächung der Pflanzen durch eine nicht unerhebliche gesteuerte Gewebezerstörung. 2. Durch die Verletzung wird die Kutikula (äußeres Abschlußgewebe) wie eine Perforierung vielfach durchbrochen. Diese äußerste Schicht dient vor allem als Verdunstungsschutz, so daß die Pflanze durch Wegfall dieser Barriere im Falle einer gezielt herbeigeführten erheblichen Beschädigung austrocknet. Dieses ist im Falle der Unkrautbekämpfung ein erwünschter Effekt. 3. Die Kutikula ist aber gleichfalls eine Barriere gegen das Eindringen von Substanzen von außen her in die Pflanze, so daß ein vor oder während ihrer Verletzung aufgebrachtes phytoeffektives Mittel schneller in die Transport- und Stoffwechselvorgänge der Pflanze einbezogen werden kann.

Jeder der drei angesprochenen Effekte bewirkt für sich eine Bekämpfung unerwünschter Pflanzen. Vor allem aber das Zusammenwirken aller drei Effekte bewirkt durch Synergismus das Absterben der Pflanze bis in den Wurzelbereich. Hierdurch werden selbst schwer zu bekämpfende Unkräuter bei stark reduzierter Herbiziddosis vernichtet. Insgesamt wird bewirkt, daß Pflanzenbehandlungsmittel, bei denen es sich durchaus z. B. auch um das Wachstum anregende oder die Pflanzen sanierende Wirkstoffe handeln kann, in besonders wirksamer Weise von der Pflanze aufgenommen werden. Es hat sich insgesamt gezeigt, daß die Wirkstoffdosis bei Anwendung des erfindungsgemäßen Verfahrens bis auf etwa 5 % der bei herkömmlicher Anwendung erforderlichen Konzentration reduziert werden kann.

## Patentansprüche

1. Verfahren zur Behandlung von Pflanzen in Kultur- und Nichtkulturland, unter Verletzung der oberirdischen Pflanzenteile mittels eines Strahlmittels, dadurch gekennzeichnet, daß auf die oberirdischen Pflanzenteile vor oder während ihrer Verletzung mit dem Strahlmittel Pflanzenbehandlungsmittel derart aufgebracht werden, daß diese aufgrund der oberflächlichen Verletzung von den Pflanzen (23) unmittelbar aufgenommen werden.

2. Verfahren nach Anspruch 1, dadurch gekennzeichnet, daß das Strahlmittel mittels einer druckluftbeaufschlagten Strahldüse (2) ausgebracht wird.

3. Verfahren nach Anspruch 1, dadurch gekennzeichnet, daß das Strahlmittel mittels eines Schleuderrades (24) mechanisch beschleunigt ausgebracht wird.

4. Verfahren nach Anspruch 1, dadurch gekennzeichnet, daß mittels der Strahldüse (2) gleichzeitig Pflanzenbehandlungsmittel und ein feinteiliges Strahlmittel unter Verletzung der oberirdischen Teile der Pflanzen (23) derart aufgebracht werden, daß dort aufgrund einer oberflächlichen Beschädigung eine unmittelbare Aufnahme und Einwirkung der Pflanzenbehandlungsmittel erfolgt.

5. Verfahren nach Anspruch 1, dadurch gekennzeichnet, daß auf die oberirdischen Pflanzenteile vor oder während ihrer Verletzung mit dem Strahlmittel Pflanzenbehandlungsmittel derart aufgebracht werden, daß die Pflanzen (23) aufgrund oberflächlicher Verletzung und/oder aufgrund der Einwirkung der Pflanzenbehandlungsmittel absterben.

6. Verfahren nach Anspruch 1, dadurch gekennzeichnet, daß als Pflanzenbehandlungsmittel Herbizide, Fungizide, Insektizide, Wachstumsregler und/oder deren Wirkstoffe, sowie Dünger und andere phytoeffektive Stoffe, auch in Kombination, verwendet werden.

7. Verfahren nach mindestens einem der vorhergehenden Ansprüche, dadurch gekennzeichnet, daß die Pflanzenbehandlungsmittel in phytoeffektiven Konzentrationen eingesetzt werden.

8. Verfahren nach mindestens einem der vorhergehenden Ansprüche, dadurch gekennzeichnet, daß die Pflanzenbehandlungsmittel in gelöster, suspendierter oder emulgierter Form vorliegen.

9. Verfahren nach mindestens einem der vorhergehenden Ansprüche, dadurch gekennzeichnet, daß die Teilchen des Strahlmittels porös und offenporig sind.

10. Verfahren nach mindestens einem der vorhergehenden Ansprüche, dadurch gekennzeichnet, daß die Teilchen des Strahlmittels Korngrößen von etwa 50 bis 3.000 µm für den herbiziden Anwendungsbereich und Korngrößen von 50 bis 500 µm für die nicht herbiziden Bereiche aufweisen und scharfkantig, oberflächlich zerklüftet und/oder porös sind.

11. Verfahren nach mindestens einem der vorhergehenden Ansprüche, dadurch gekennzeichnet, daß die innere und/oder äußere Oberfläche der Teilchen des Strahlmittels mit dem Pflanzenbehandlungsmittel belegt ist.

12. Verfahren nach mindestens einem der vorhergehenden Ansprüche, dadurch gekennzeichnet, daß auch die Teilchen des Strahlmittels ein phytoeffektives Mittel darstellen.

13. Vorrichtung (1) zur Durchführung des Verfahrens nach mindestens einem der vorhergehenden Ansprüche, dadurch gekennzeichnet, daß eine Strahldüse (2) und/oder ein Schleuderrad (24) zum Beschleunigen und zum Ausbringen und gegebenenfalls auch zum Zusammenführen des Strahlmittels und des Pflanzenbehandlungsmittels vorgesehen sind.

14. Vorrichtung (1) zur Durchführung des Verfahrens nach mindestens einem der vorhergehenden Ansprüche, dadurch gekennzeichnet, daß an eine Strahldüse (2) ein Drucklufterzeuger (4) und ein Behälter (7) für das Strahlmittel angeschlossen sind, und daß außerdem ein Wirkstoffbehälter (11) für ein Pflanzenbehandlungsmittel derart angeschlossen ist, daß vor dem Ausbringen auf die Pflanzenteile eine Vermischung des Strahlmittels und des Pflanzenbehandlungsmittels erfolgt.

15. Vorrichtung (1) nach mindestens einem der vorhergehenden Ansprüche, dadurch gekennzeichnet, daß an ein Schleuderrad (24) ein Behälter für das Strahlmittel angeschlossen ist und außerdem eine aus einem Wirkstoffbehälter mit Pflanzenbehandlungsmittel gespeiste Sprühdüse derart angeordnet ist, daß auf die oberirdische Pflanzenteile vor oder während ihrer Verletzung mit dem Strahlmittel Pflanzenbehandlungsmittel aufgebracht wird.

16. Feinteiliges Strahlmittel zur Durchführung des Verfahrens nach Anspruch 1 und mindestens einem der weiteren Ansprüche, dadurch gekennzeichnet, daß dessen kleine feste Teilchen eine Korngröße von 50 bis 3.000 µm aufweisen und scharfkantig, oberflächlich zerklüftet und/oder porös sind sowie innere oder äußere Oberflächen aufweisen, die mit einem phytoeffektiven Mittel belegt sind.

## Claims

1. Method for treating plants in cropped land and non-crop land, in which the aerial plant organs are scarified by means of an abrasive, characterized in that the plant treatment compositions which are applied to the aerial plant organs before or while they are scarified with the abrasive are applied in such a way that they are taken up directly by the plants (23) due to the surface scarification.

2. Method according to Claim 1, characterized in that the abrasive is applied by means of a compressed-air-operated jet nozzle.

3. Method according to Claim 1, characterized in that the abrasive is applied by means of a spinning disc (24) in mechanically accelerated form.

4. Method according to Claim 1, characterized in that plant treatment composition and a finely divided abrasive are applied, by means of the jet nozzle (2), simultaneously while scarifying the aerial organs of the plants (23) in such a way that the plant treatment compositions are taken up directly at, and act directly on, these aerial plant organs owing to surface damage.

5. Method according to Claim 1, characterized in that plant treatment compositions are applied to the aerial plant organs before or while they are scarified with the abrasive in such a way that the plants (23) die owing to surface damage and/or owing to the action of the plant treatment compositions.

6. Method according to Claim 1, characterized in that the plant treatment compositions used are herbicides, fungicides, insecticides, growth regulators and/or their active ingredients, and also fertilizers and other phytoeffective substances, also in combination.

7. Method according to at least one of the preceding claims, characterized in that the plant treatment compositions are employed in phytoeffective concentrations.

8. Method according co at least one of the preceding claims, characterized in that the plant treatment compositions are present in dissolved, suspended or emulsified form.

9. Method according to at least one of the preceding claims, characterized in that the particles of the abrasive are porous and open-pored.

10. Method according to at least one of the preceding claims, characterized in that the particles of the abrasive have particle sizes of approximately 50 to 3000 µm for the herbicidal sector of application and particle sizes of 50 to 500 µm for the non-herbicidal sectors and are sharp-edged, surface-fissured and/or porous.

11. Method according to at least one of the preceding claims, characterized in that the internal and/or external surface of the particles of the abrasive is covered with the plant treatment composition.

12. Method according to at least one of the preceding claims, characterized in that the particles of the abrasive themselves constitute a phytoeffective composition.

13. Device (1) for carrying out the method according to at least one of the preceding claims, characterized in that a jet nozzle (2) and/or a spinning disc (24) are provided for accelerating and for applying and, if appropriate, also for combining the abrasive and the plant treatment composition.

14. Device (1) for carrying out the method according to at least one of the preceding claims, characterized in that an air compressor (4) and a container (7) for the abrasive are linked to a jet nozzle (2) and in that, moreover, an active substance container (11) for a plant treatment composition is linked in such a way that the abrasive and the plant treatment composition are combined before they are applied to the plant organs.

15. Device (1) according to at least one of the preceding claims, characterized in that a container for the abrasive is linked to a spinning disc (24) and, moreover, a spray nozzle fed with plant treatment composition from an active substance container is arranged in such a way that plant treatment composition is applied to the aerial plant organs before or while they are scarified with the abrasive.

16. Finely divided abrasive for carrying out the method according to Claim 1 and at least one of the subsequent claims, characterized in that its small solid particles have a particle size of 50 to 3000 µm, are sharp-edged, surface-fissured and/or porous and exhibit internal or external surfaces which are covered with a phytoeffective composition.

## Revendications

1. Procédé de traitement de plantes dans des terres cultivées et des terres non cultivées, par blessure des parties aériennes des plantes au moyen d'une matière projetée, caractérisé en ce qu'on épand sur les parties aériennes des plantes, avant ou pendant leur blessure avec la matière projetée, des agents de traitement des plantes de manière que ces agents soient directement absorbés par les plantes (23) en raison de la blessure superficielle.

2. Procédé suivant la revendication 1, caractérisé en ce que la matière projetée est appliquée au moyen d'une buse de projection (2) fonctionnant à l'air comprimé.

3. Procédé suivant la revendication 1, caractérisé en ce que la matière projetée est appliquée avec accélération mécanique au moyen d'une turbine (24).

4. Procédé suivant la revendication 1, caractérisé en ce que l'agent de traitement des plantes et une matière à projeter en fines particules sont appliqués en même temps au moyen de la buse de projection (2) en blessant les parties aériennes des plantes (23) de façon telle qu'une absorption et une action directes des agents de traitement des plantes s'y accomplissent en raison d'une altération de la surface.

5. Procédé suivant la revendication 1, caractérisé en ce qu'on applique aux parties aériennes de plantes avant ou pendant leur blessure par la matière à projeter, des agents de traitement des plantes de manière que les plantes (23) meurent à cause de la blessure superficielle et/ou à cause de l'action des agents de traitement des plantes.

6. Procédé suivant la revendication 1, caractérisé en ce qu'on utilise comme agents de traitement des plantes, des herbicides, des fongicides, des insecticides, des régulateurs de croissance et/ou leurs substances actives, ainsi que des engrais et d'autres substances agissant sur les plantes, également en association.

7. Procédé suivant au moins l'une des revendications précédentes, caractérisé en ce que les agents de traitement des plantes sont utilisés à des concentrations agissant efficacement sur les plantes.

8. Procédé suivant au moins l'une des revendications précédentes, caractérisé en ce que les agents de traitement des plantes se présentent sous la forme en solution, en suspension ou en émulsion.

9. Procédé suivant au moins l'une des revendications précédentes, caractérisé en ce que les particules de la matière à projeter sont poreuses et à pores ouverts.

10. Procédé suivant au moins l'une des revendications précédentes, caractérisé en ce que les particules de la matière à projeter ont des diamètres de grains d'environ 50 à 3000 µm pour le domaine d'application herbicide et des diamètres de grains de 50 à 500 µm pour les domaines non herbicides et sont à bords tranchants, fracturées en surface et/ou poreuses.

11. Procédé suivant au moins l'une des revendications précédentes, caractérisé en ce que la surface interne et/ou la surface extérieure des particules de la matière à projeter sont recouvertes de l'agent de traitement des plantes.

12. Procédé suivant au moins l'une des revendications précédentes, caractérisé en ce que les particules de la matière à projeter constituent elles aussi un agent produisant un effet sur les plantes.

13. Dispositif (1) pour la mise en oeuvre du procédé suivant au moins l'une des revendications précédentes, caractérisé en ce qu'une buse de projection (2) et/ou une turbine (24) sont prévues pour l'accélération et l'épandage et aussi le cas échéant pour la réunion de la matière à projeter et de l'agent de traitement des plantes.

14. Dispositif (1) pour la mise en oeuvre du procédé suivant au moins l'une des revendications précédentes, caractérisé en ce qu'une source d'air comprimé (4) et un récipient (7) pour la matière à projeter sont raccordés à la buse de protection (2) et en ce qu'il y est raccordé en outre un réservoir (11) de substance active pour un agent de traitement des plantes, de manière qu'un mélange de la matière à projeter et de l'agent de traitement des plantes s'effectue avant l'épandage sur les parties de plantes.

15. Dispositif (1) suivant au moins l'une des revendications précédentes, caractérisé en ce qu'un réservoir pour la matière à projeter est raccordé à une turbine (24) et en outre, une buse de pulvérisation alimentée en agent de traitement des plantes depuis un réservoir de substance active est disposée de manière que l'agent de traitement des plantes soit appliqué aux parties aériennes de plantes avant ou pendant leur blessure avec la matière à projeter.

16. Matière à projeter en fines particules pour la mise en oeuvre du procédé suivant la revendication 1 et l'une au moins des autres revendications, caractérisée en ce que ses petites particules solides ont un diamètre de 50 à 3000 µm et en ce qu'elles sont à bords tranchants, fracturées en surface et/ou poreuses de même qu'elles présentent des surfaces internes ou externes qui sont revêtues d'un agent produisant un effet sur les plantes.
